# EUROPÄISCHE PATENTSCHRIFT

(11) **EP 2 421 624 B1**
(45) Veröffentlichungstag und Bekanntmachung des Hinweises auf die Patenterteilung: **12.06.2013**
(21) Anmeldenummer: 10719253.6
(22) Anmeldetag: 21.04.2010
(51) Int. Cl.: B01D 15/20, B01D 15/22, G01N 30/54

(54) **VERFAHREN UND VORRICHTUNG ZUR SORPTIVEN TRENNUNG VON STOFFGEMISCHEN**
METHOD AND DEVICE FOR THE SORPTIVE SEPARATION OF SUBSTANCE MIXTURES
PROCÉDÉ ET DISPOSITIF POUR SÉPARER PAR SORPTION DES MÉLANGES DE SUBSTANCES

(30) Priorität: 22.04.2009 DE 102009017749
(43) Veröffentlichungstag der Anmeldung: 29.02.2012
(73) Patentinhaber: Karlsruher Institut für Technologie, 76131 Karlsruhe (DE)
(72) Erfinder: FRANZREB, Matthias, 76185 Karlsruhe (DE); MÜLLER, Tobias, 65555 Limburg (DE)
(86) Internationale Anmeldenummer: PCT/EP2010/002432
(87) Internationale Veröffentlichungsnummer: WO 2010/121792

(56) Entgegenhaltungen:
- EP-A2- 2 009 442
- GB-A- 1 275 126
- US-A- 5 135 549
- US-A- 5 929 321

## Beschreibung

Die Erfindung betrifft ein Verfahren sowie eine Vorrichtung zur soptiven Trennung von Stoffgemischen, insbesondere flüssigen Stoffgemischen gemäß dem ersten und elften Patentanspruch.

In der chemischen und biotechnologischen Industrie besteht grundsätzlich ein Bedarf an Sorptionsprozessen hoher Effizienz, insbesondere im Hinblick auf deren Produktivitat und Nachhaltigkeit.

Für diesen Zweck weit verbreitet ist die zyklisch betriebene Sorption in Festbettschüttungen mit partikulären Sorbentien im Größenbereich von ca. 2 bis 1000 µm. Hierbei liegen die Sorbentien zunächst unbeladenen bzw. mit einer geeigneten Ausgangsbeladung vor. Wird das Festbett nun mit der zu behandelnden Lösung durchströmt kommt es zu einem Sorptionsvorgang, bei dem ursprünglich gelöst vorliegende Substanzen (Sorptive) sich an das Sorbens binden. Im Falle eines Ionenaustauschs geht dabei eine in Bezug auf die elektrische Ladung äquivalente Menge einer anderen Substanz in Lösung über. Im Laufe des Sorptionsvorgangs kommt es bis zu einer maximalen Beladung zu einer zunehmenden Anreicherung von Sorptiven an die Sorbenspartikel und damit zu einer Ausbildung einer Beladungsfront, die durch das Festbett wandert. Erscheint die Beladungsfront am Ablauf des Festbetts kommt es zu einer Durchströmung von Sorptiven durch die Festbettschüttung ohne nennenswerte Sorption. Der Zulauf von Sorptiven durch das Festbett muss gestoppt werden.

Der vorgenannten Sorption folgt ein Elutionsschritt, beim dem das gebundene Sorptiv möglichst quantitativ, d.h. vollständig wieder von den Sorbenspartikeln der Schüttung entfernt wird. Als Elutionssubstanzen dienen z.B. stark salzhaltige Medien, konzentrierte Sauren, Laugen oder organische Lösungsmittel. Die genannten Elutionssubstanzen verursachen jedoch nicht unerhebliche Kosten, sowohl bei der Anschaffung als auch in der Entsorgung.

Bei biotechnologischen Anwendungen stellen die Elutionslösungen oft ein Wertprodukt dar, das die Zielsubstanz in gereinigter und konzentrierter Form enthält. Zur Unterstützung der Elutionen zugegebene Substanzen wie Salze oder auch Imidazol oder Isopropanol müssen jedoch vor einer weiteren Reinigung oftmals aufwendig durch z.B. Membranverfahren oder Gelfiltration wieder entfernt werden. Ein kontinuierlich ablaufender Sorptionsprozess ist daher nicht realisierbar.

Ein Sorptionsprozess muss im technischen Maßstab über eine Möglichkeit zur reversiblen Sorption/Desorption von Substanzen verfügen. Hierbei sind chemische Elutions- oder Regenerationssubstanzen aus vorgenannten Gründen zu vermeiden. Alternative Möglichkeiten zum Umschalten zwischen Sorption und Desorption bietet der Einsatz physikalischer Einflussgrößen, wie insbesondere Druck oder Temperatur. Eine Druckänderung hat jedoch nur einen begrenzten Einfluss auf das Sorptionsgleichgewicht in Flüssigkeiten, so dass eine technische Nutzung dieses Effekts bisher nicht aussichtsreich erscheint. Dagegen wirken Temperaturände-rungen sowohl in Gasen als auch in Flüssigkeiten mehr oder minder ausgeprägt auf die Sorption von Substanzen an festen Sorbentien.

Beispielsweise offenbart [1] zyklische Sorptionsprozesse unter Einsatz eines Temperaturwechsels als treibende Kraft für die Elution zur partiellen Wasserentsalzung. Dabei kommen Ionenaustauscherharze zum Einsatz.

Ferner wird in [2] ein auf Temperaturvariationen basierender, Sorptionsprozess, das sog. parametrische Pumpen beschrieben. Hierbei wird eine Lösung mit einem Substanzgemisch in zwei Kompartimente aufgeteilt, diese auf zwei unterschiedliche Temperaturniveaus gebracht und wiederholt mit der gleichen Sorbensmenge in Kontakt gebracht. Dabei kommt es zu einer schrittweisen Trennung der Substanzen. Aufgrund der benötigten hohen Anzahl an Temperaturzyklen favorisiert sich der Prozess jedoch nicht für den technischen Maßstab.

Aus US-A-5929321 ist ein ähnliches Verfahren zur Desorption gasförmiger Produkte aus einer stationären Phase mittels Temperaturerhöhung bekannt, jedoch wird in diesem Dokument ausschließlich im Rahmen der Gaschromatographie gearbeitet. Die genaue Natur des Sorbens wird auch nicht genannt.

Den grundlegenden Vorteilen von temperaturinduzierten Elutions- bzw. Regenerationsverfahren von Sorptionsprozessen im Hinblick auf anfallende Chemikalien- und Entsorgungskosten stehen bei einer industrielle Umsetzung zwei Problematiken entgegen.

Einerseits ist der Unterschied in der Temperaturabhängigkeit der Sorptionsgleichgewichte verschiedener Substanzen oft nur sehr gering ausgeprägt, so dass eine effektive Trennung mehrfache Sorptions- und Desorptionsvorgänge und damit einen erhöhten Zeitaufwand und/oder vielfache Temperaturänderungen erfordern. Insbesondere größere Temperaturänderungen sind bei thermosensiblen gasförmigen oder auch flüssigen Stoffgemischen, die oftmals nur in einem bestimmten Temperaturfenster stabil sind, nicht tolerierbar. Auch erfordert jede Erwärmung und Abkühlung größerer Flüssigkeitsvolumen einen erheblichen Energieaufwand.

Davon ausgehend liegt die **Aufgabe der Erfindung** darin, eine Vorrichtung sowie ein Verfahren zur sorptiven Trennung von flüssigen Stoffgemischen mit einem temperaturinduzierten Sorptions- und Desorptionsprozess mit geringem Energieaufwand und maximaler Aufkonzentrierung einer Zielkomponente vorzuschlagen.

Die Aufgabe wird durch einer Vorrichtung und ein Verfahren mit den Merkmalen der Ansprüche 1 und 11 gelöst. Die auf diese rückbezogene Unteransprüche geben vorteilhafte Ausführungsformen wieder.

Die Grundidee der Erfindung liegt darin, die für eine temperaturabhängige Desorption zuzuführende Energie nicht auf die gesamte Sorptionsfläche der Sorbentien zugleich zuzuführen. Vielmehr werden Temperierungsmittel vorgeschlagen, die nur auf einen Teil der Sorptionsfläche einwirken. Der Wirkbereich der Temperierungsmittel, d.h. der Bereich auf der Sorptionsfläche, auf dem eine Temperierung durch die Temperierungsmittel stattfindet, umfasst somit nur einen Teil der Sorptionsfläche.

Um danach eine temperaturabhängige Sorption und Desorption von Sorptiven auf der gesamten Sorptionsfläche auf den Sorbentien sicherzustellen, wird die Möglichkeit der seriellen Einwirkung des Wirkbereichs der genannten Temperierungsmittel auf die gesamte Sorptionsfläche vorgesehen. Hierfür sind Mittel für eine Verschiebung des Wirkbereichs über die gesamte Sorptionsoberfläche vorgesehen. Der Wirkbereich wird vorzugsweise zyklisch, d.h. nach einem festgelegten Ablaufschema wiederkehrend über die Erstreckung der gesamten Sorptionsfläche bewegt. Dies ermöglicht beispielsweise eine zyklisch wiederkehrende serielle Sorption und/ oder Desorption auf die gesamte Sorptionsfläche.

Bei einem seriellen Temperieren der Sorptionsfläche und damit der Sorbentien wird die Temperatur nur im Einflussbereich des Temperierungsmittel, d.h. im Wirkbereich durch dieses unmittelbar temperiert, d.h. mit einer Temperaturänderung beaufschlagt. Allerdings erfolgt dabei eine Beeinflussung der Temperierung durch Wärmeübertragung innerhalb der thermoresponsiven Sorbentien sowie durch die umgebende Flüssigkeit. Eine Wärmeübertragung erfolgt stets bei Wärmegradienten. Sie bewirkt z.B. nach einer für eine Desorption erfolgten Aufheizung eine beschleunigte Wiederabkühlung eines für eine Desorption aufgeheizten Teils der Festbettsäule durch umgebende Sorbentien und Flüssigkeit. Nach dieser beschleunigten Abkühlung vorzugsweise ohne Einfluss des oder eines weiteren Temperierungsmittels steht dieser Teil ohne eine erneute Zufuhr zusätzlicher Energie sofort wieder für eine erneute Sorption zur Verfügung. Die an das Stoffgemisch abgeleitete Wärme wird aufgrund der Strömungsgeschwindigkeit des Stoffgemisches in Richtung des Ablaufs transportiert und dabei von den umgebenden Sorbentien aufgenommen und muss bei deren Aufheizung nicht mehr von den Temperierungsmittel aufgebracht werden.

Ebenso bewirkt die genannte Wärmeübertragung in einer anderen Ausführungsform mit thermoresponsiven Sorbentien, bei der Sorption bei höheren Temperaturen stattfindet als Desorption, nach einer für eine Desorption erfolgten Abkühlung als Temperierung eine beschleunigte Wiederaufheizung eines für eine Desorption aufgeheizten Teils der Festbettsäule durch die umgebenden Sorbentien und Flüssigkeit.

Ein wesentliches Merkmal betrifft die Verwendung von thermoresponsiven Materialien als Sorbentien. Im Sinne der Erfindung werden unter dem Begriff thermoresponsive Materialien Sorbensmaterialien verstanden, die an ihrer Oberfläche spezielle Polymere gebunden haben, die innerhalb eines engen Temperaturintervalls eine starke Konformationsänderung durchlaufen.

Eine besonders vorteilhafte Ausführung eines thermoresponsiven Sorbens für eine sorptive Trennung von flüssigen Stoffgemischen sind z.B. Partikel mit einer Oberflächenfunktionalisierung aus poly(N-isopropylacrylamid) (poly-NIPAAm). Unterhalb einer Temperatur von ca. 30°C bildet poly-NIPAAm ausgestreckte Polymerketten, oberhalb von Temperaturen von ca.35°C dagegen kollabieren die Ketten zu kompakten Knäul, mit ausgeprägten hydrophoben Charakter. Die Übergangstemperatur von ca.32°C wird als LCST (lower critical solution temperature) bezeichnet.

Die Konformitätsänderung und damit der Übergang von Adsorption zu Desorption von thermoresponsiven Sorbentien findet in vorteilhafter Weise in einen engen Temperaturbereich, im genannten Fall zwischen 30 und 35°C statt. Folglich erstreckt sich der Bereich, in dem eine temperaturinduzierte Sorption/Desportion stattfindet, bei thermoresponsiven Sorbentien nicht auf die bei herkömmlichen Sorbentien bekannten erheblich größeren Temperaturintervalle, die insbesondere bei Gasen 100°C und mehr betragen können. Für eine Einleitung und Durchführung einer Desorption oder einer Sorption sind bei thermoresponsiven Sorbentien nur geringe Temperaturänderungen und damit in vorteilhafter Weise nicht nur ein signifikant reduzierter Energieaufwand, sondern auch ein geringerer Zeitaufwand erforderlich.

Wird ein mit poly-NIPAAm funktionalisiertes Sorbenspartikel in Kontakt mit z.B. einer Proteinlösung gebracht, kommt es oberhalb der LCST zu einer Bindung hydrophober Proteine. Wird anschließend die Temperatur unterhalb die LCST gesenkt, expandieren die poly-NIPAAm Knäul wieder zu ausgestreckten Polymerketten. Durch den damit verbundenen weitgehenden Verlust des hydrophoben Charakters und die zusätzliche räumliche Umorientierung kommt es zu einer effektiven Desorption gebundener Moleküle. Für eine Desorption ist folglich eine geringe Abkühlung von einer Temperatur über 32°C auf eine Temperatur unterhalb 32°C anstelle einer Aufheizung als Temperierung erforderlich.

In Verbindung mit Sorbensmaterialien mit Polymerketten mit LCST-Charakteristik auf ihrer Oberfläche ist der vorgeschlagene Einsatz einer Festbettsäule mit verschiebbarer, lokaler Kühlzone besonders vorteilhaft. Befindet sich die Säule in einer temperaturgeregelten Kammer (Klimakammer), lässt sich die Grundtemperatur des Systems auf z.B. 35°C einstellen. Wird nun ein Proteingemisch durch die Säule gepumpt, kommt es zu einer Bindung hydrophober Proteine an das Sorbensmaterial. Ist die Säule weitgehend beladenen kann durch das Verfahren einer lokalen Kühlzone in einem eng begrenzten Bereich eine Desorption erreicht werden.

Der Einsatz einer Abkühlung zum Initiieren der Desorption stellt dabei eine besonders schonende Art der Desorption dar, bei der die Gefahr einer Denaturierung des Produkts z.B. durch Temperaturänderungen sehr gering ist. Im Gegensatz hierzu stellen konventionelle Desorptionsmethoden über extreme pH-Werte oder Salzkonzentrationen oftmals eine Gefahr für die biologische Aktivität des Produkts dar, da die räumliche Konformation des Produkts (oftmals ein komplexes Protein) durch Denaturierungsprozesse verändert wird.

Der Einsatz einer effektiven Desorption durch Abkühlung ist nur im Zusammenhang mit thermoresponsiven Sorbentien der vorgenannten Art möglich, da nur diese auch innerhalb eines Temperaturintervalls weniger Grad eine starke Veränderung ihrer Bindungseigenschaften zeigen. Da der Bindungsvorgang in der Regel aus wässrigen Lösungen bei Temperaturen im Bereich von 10°C bis ca. 40°C, vorzugsweise zwischen 20 oder 30 und 35°C erfolgt, ist das Ausmaß einer möglichen Abkühlung deutlich begrenzt und für Sorbentien mit konventioneller Temperaturabhängigkeit der Bindung zu gering. Zudem erfolgt bei konventionellen Sorbentien in der Regel eine Stärkung der Bindung mit abnehmender Temperatur.

Die LCST-Temperatur thermoresponsiver Polymere lässt sich durch Wahl des Polymers und insbesondere durch die Synthese von Co-Polymeren beeinflussen und deckt den genannten Bereich der üblichen Betriebstemperaturen für eine Flüssigkeitschromatografie wässriger Lösungen ab. Neben poly(N-isopropylacrylamide) (pNIPAAM, LCST 32°C), poly(N,N'-diethylacrylamide)(pDEAAM, LCST 33°C), Poly(N-[(2,2-dimethyl-1,3-dioxolane)methyl]acrylamide) (pDMDOMA, LCST 23°C), bieten insbesondere Co-Polymere die Möglichkeit die LCST gezielt zu verändern. So führt z.B. eine stufenweise Umwandlung der Dioxolan-gruppen von pDMDOMA in Diolreste zu Polymeren mit LCSTs zwischen 23°C (0% Diol-reste) bis ca. 85°C (43% Diol-reste). Hierdurch ist eine Anpassung der Eigenschaften der thermoresponsiven Sorbentien an verschiedene Anwendungsfälle möglich.

Neben thermoresponsiven Polymeren mit einem LCST-Punkt existieren auch Polymere, die eine "upper critical solution temperature" kurz UCST besitzen. Diese Polymere zeigen einen kompakten Zustand bei tiefen Temperaturen und eine Ausdehnung bei Temperaturerhöhung über den UCST. Beispiele hierfür sind poly(N-acetylacrylamide) (pNAcAAm, UCST ca.30°C) oder Polyacrylamide (pAAm, UCST ca.12°C). Bei der Verwendung eines Sorbens mit UCST ist wie für herkömmliche Sorbentien für eine Desorption eine Erwärmung der Sorptionsfläche erforderlich, während die Sorptionstemperatur darunter liegt. Jedoch ist die zwischen Desortpion und Sorption erforderliche Temperaturänderungen wie bei Sorbentien mit LCST sehr gering. In diesem Fall ist ein Heizelement als Temperierungsmittel erforderlich.

Zur Vermeidung einer Verschleppung von Verunreinigungen aus dem Zulauf in den desorbierten Konzentrationspeak der Zielsubstanz besteht die Möglichkeit, die Säule zu Beginn des Desorptionsvorgangs für eine vorgegebenen Betriebszeit mit einer Spüllösung, die keine Verunreinigungen enthält, zu beaufschlagen.

Die Erfindung wird im Folgenden anhand von Ausführungsformen mit den folgenden Figuren näher erläutert. Es zeigen
**Fig.1a** **und b** jeweils eine Seitenansicht einer ersten Ausführung zur sorptiven Trennung von Stoffgemischen in Grundstellung **(a)** der Temperierungsvorrichtung sowie bei ablaufender Desorption **(b),**
**Fig.2** eine Seitenansicht einer zweiten Ausführung mit einem zusätzlichen zweiten Temperierungsmittelmit einer Isolierschicht sowie **Fig.3** eine Seitenansicht einer weiteren Ausführungsform.

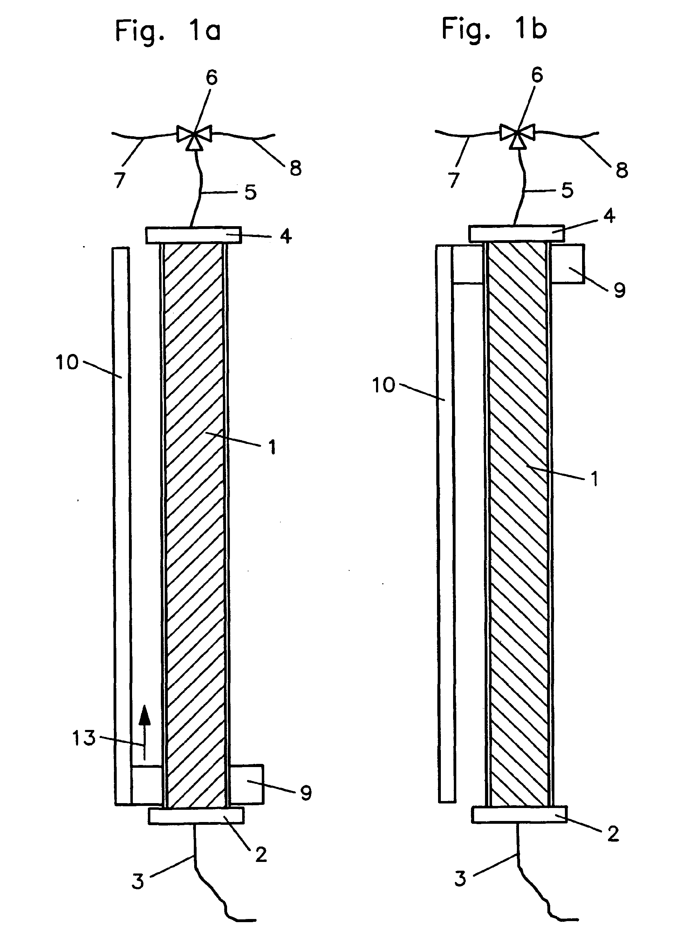

Die Vorrichtung der ersten Ausführungsform **(****Fig.1a** **und b)** umfasst eine aus Sorbenspartikeln gebildete Festbettsäule **1,** die mit einem thermoresponsiven Material als Sorbens gefüllt ist. Die Säule weist am Säulenanfang **2** einen Zulauf **3** sowie am Säulenende **4** einen Ablauf **5** für ein fluides Stoffgemisch auf, das in der Säule stofflich aufgetrennt werden soll. Der Ablauf **5** ist an ein Mehrwegeventil **6** angeschlossen, die den Strom der aufgetrennten Substanzen in einen Produktablauf **7** und einem Reststoffablauf **8** aufspaltet. Der Querschnitt der Säule zwischen Säulenanfang und Säulenende ist vorzugsweise gleich bleibend, weiter bevorzugt rund.

Weiterhin ist um die Säule **1** eine vorzugsweise ringförmige Temperierungsvorrichtung **9** als Temperierungsmittel angeordnet, das in guten Wärmekontakt mit der Sorptionsoberfläche des thermoresponsivem Sorbens steht. Die Höhe der Temperierungsvorrichtung ist wesentlich geringer als die Säulenhöhe, sodass jeweils nur ein Teil der Sorptionsoberfläche zugleich temperierbar ist. Die Temperierungsvorrichtung ist axial zur Säule über eine Verfahrvorrichtung **10** in Vorschubrichtung (Vorschub 13) verschiebbar, vorzugsweise über einen Linearantrieb (Spindelantrieb, Piezoantrieb).

Die Temperierungsvorrichtung ist vorzugsweise eine Kühlvorrichtung für die vorgenannten thermoresponsiven Sorbentien des vorgenannten Typs LCST. Die Erfindung umfasst aber auch in einer zweiten alternativen Variante Heizvorrichtungen oder Heizelemente als Temperierungsvorrichtung für vorgenannte Sorbentien des Typs UCST.

Es liegt im Rahmen der Erfindung, die Verfahrvorrichtung für eine Relativbewegung zwischen Säule und Temperierungsmittel allgemein vorzusehen. Dies umfasst sowohl eine Ausführung mit feststehenden Temperierungsmittel und beweglicher Säule oder sowohl beweglicher Säule als auch beweglichen Temperierungsmitteln. Temperierungsmittel, insbesondere die erwähnten Heizelemente weisen oftmals schockempfindliche Komponenten wie Heizwendeln auf. Eine immobile Anordnung dieser reduziert folglich nicht nur die Gefahr von mechanischer Einwirkung und erhöht damit die Lebensdauer signifikant, sondern reduziert die Anzahl beweglicher Teile und damit der möglichen Wärmeverluste.

Eine bevorzugte gleitende Führung der Temperierungsvorrichtung direkt auf der Säulenaußenoberfläche dient nicht nur einer zuverlässigen verkantungsfreien Führung, sondern auch einer verbesserten Wärmeübertragung zwischen Säule und Temperierungsvorrichtung im Wirkbereich.

Eine Begrenzung der axialen Wärmeleitung in der Säulenaußenoberfläche ist durch eine optionale axiale Segmentierung derjenigen erzielbar. Sie dient der Konzentrierung der durch das Temperierungsmittel eingebrachten Energie in den begrenzten unmittelbaren Einwirkbereich des aktiven Temperierungsmittels. Eine Streuung der Energie auf einen zu großen Bereich in der Säule wird damit vermieden, der Wirkbereich schärfer abgegrenzt. Die Fokussierung dient damit einer besonders e-nergieeffizienten Temperierung (Abkühlung oder Aufheizung) eines begrenzten Sorptionsoberflächenanteils auf eine vorgegebene Desorptionstemperatur, d.h. des Wirkbereichs und vermeidet eine Streuung in axial angrenzende Bereiche über die Säulenaußenoberfläche.

Eine bevorzugte Ausführungsform sieht ein ineinandergreifendes Gewinde auf Säulenoberfläche und Heizelement vor. Die Gewindeflanken vergrößern dabei wie ineinandergreifende Kühlrippen die Wärmeübertragungsfläche. Eine Verstellvorrichtung für diese Ausführungsform erfolgt beispielsweise durch Relativverdrehung von Säule und Temperierungsmittel ähnlich einer Schraubenmutter auf einem Gewinde.

Eine weitere Ausführungsform sieht ineinander greifende axiale Rippen auf Säulenoberfläche und Temperierungsvorrichtung als Vergrößerung der Wärmeübertragungsfläche vor.

**Fig.1a** zeigt die erste Ausführungsform in Ausgangsposition. Die Temperierungsvorrichtung **9** (Temperierungsmittel) ist zunächst ausgeschaltet am Säulenanfang **2** im Bereich des Zulaufs **3,** d.h. das Festbett aus Sorbenspartikeln wird als normale Sorptionsstufe bei einer ersten Temperatur T₁ betrieben. Dabei durchströmt das fluide Stoffgemisch die Schüttung der Sorbenspartikel in der Säule **1** mit einer Geschwindigkeit v₀, wobei das Sorptiv sich an die Sorptionsfläche der Sorbensschüttung bindet. Dies wird bis zu einem Zeitpunkt beibehalten, an dem sich die Beladungsfront bis auf einen definierten empirisch oder rechnerisch ermittelten Abstand dem Ablauf genähert hat. Zu diesem Zeitpunkt wird die Temperierungsvorrichtung **9** eingeschaltet und der Wirkbereich der Temperierungsvorrichtung mit einer Geschwindigkeit v_{H} nach oben verfahren (Vorschub **13).** Im eng begrenzten Bereich der Temperierungsvorrichtung ändert sich die Temperatur auf einen Wert T₂, bei dem das gebundene Sorptiv wieder eluiert, d.h. von der temperierten, d.h. vorzugsweise abgekühlten Sorptionsfläche (im Falle des LCST) wieder desorbiert. Durch eine Abstimmung der Geschwindigkeiten v₀ und v_{H} lassen sich nun für verschiedene Anwendungsfälle optimierte Betriebsbedingungen erreichen.

Für den Fall v₀ = v_{H} bewegt sich die Temperierungsvorrichtung synchron mit der Durchströmung des fluiden Stoffgemisches in der Säule in Richtung des Ablaufs. Die Vorschubgeschwindigkeit v_{H} entspricht dabei der Strömungsgeschwindigkeit v₀. Auch hierdurch wird die Menge an dem zu temperierenden Stoffgemisch und somit der Energiebedarf für die Elution (Desorption) reduziert. Aufgrund der Überseinstimmung zwischen Vorschub des Temperierungsmittels uns Strömungsgeschwindigkeit befindet sich immer das gleiche Flüssigkeitskompartiment im Einflussbereich des Temperierungsmittel, sodass nach anfänglicher Erwärmung das Temperierungsmittel nur noch die Verluste durch Wärmeleitung an das Sorbens und die Säulenwand ausgleichen muss. Zusätzlich wird die Aufkonzentrierung des desorbierten Sorptivs durch die Reduzierung des Volumens des erwärmten Flüssigkeitskompartiments erhöht.

Für den Fall v_{H} < v₀ überholt die Strömung die Temperierungsvorrichtung. Die Strömung gelangt mit Anteilen des eluierten Sorptivs oberhalb der wieder in Sorptionsbereiche mit ursprünglicher Temperatur, wodurch es zu einer erneuten Sorption derselben Sorptive kommt. Erreicht die Temperierungsvorrichtung etwas verzögert diesen Bereich, kommt es zu einer erneuten Desorption. Die dabei eluierte Sorptivmenge summiert sich zu dem über den Zulauf kontinuierlich weiter zugefügten Sorptiv auf. Durch wiederholte Abfolge dieser Vorgange kommt es zum einen zur effektiven Trennung von Substanzen mit unterschiedlicher Temperaturabhängigkeit des Sorptionsgleichgewichts und zum anderen zur Ausbildung eines Maximums der Sorptivkonzentration, den die Temperierungsvorrichtung durch die Säule treibt und der somit schließlich am Ablauf der Säule erscheint. Die zum Erreichen dieser häufigen Sorptions- und Desorptionsvorgänge benötigte Energiezufuhr ist dabei durch die lokale Beschränkung der Temperierung auf den Bereich der Temperierungsvorrichtung in vorgenannter Weise minimiert.

Vorzugsweise liegt die Vorschubgeschwindigkeit v_{H} zwischen 10 und 110%, weiter bevorzugt zwischen 30 und 105%, weiter bevorzugt zwischen 50 und 100% der Strömungsgeschwindigkeit v₀.

Die Bereiche, die die Temperierungsvorrichtung bereits hinter sich gelassen hat, sind weitgehend vom Sorpiv befreit. Dieser (untere) Bereich der Säule steht dann sofort für eine erneute Sorption mit kontinuierlich zuströmenden Sorptiv aus dem Zulauf zur Verfügung, wahrend sich im oberen Bereich der Saule durch die Vorwärtsbewegung der Temperierungsvorrichtung ein Elutionspeak aufbaut.

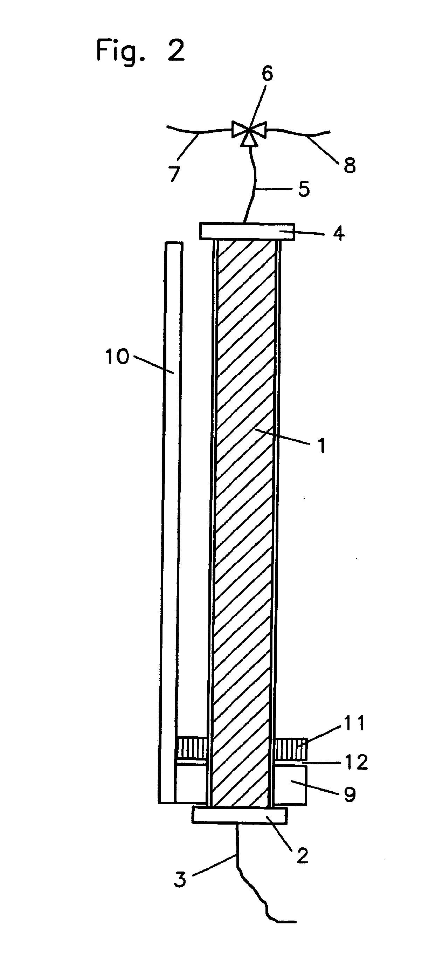

Wenn die Temperierungsvorrichtung **9** und somit der Elutionspeak das Säulenende **4** am Ablauf **5** erreicht (vgl. **Fig.1b****),** wird dieser durch Umschalten des Mehrwegeventils **6** einem separaten Produktablauf 7 zugeführt. Die Energiezufuhr der Temperierungsvorrichtung wird mit Erreichen des Säulenendes ausgeschaltet und nach thermischer Anpassung an die Umgebung, d.h. Erwärmung (Kühlvorrichtung) bzw. Abkühlen (Heizvorrichtung) an den Säulenanfang **2** (vgl. **Fig.1a** **und** **2****)** zurück verfahren. In dieser Position verbleibt die Temperierungsvorrichtung bis die Beladungsfront wiederum die Nähe des Säulenablaufs erreicht, dessen Überschreiten einen erneuten Durchlauf des Verfahrens (Elutionsvorgang) initiiert.

Das vorgenannte Verfahren ermöglicht einen kontinuierlichen Zulauf an fluiden Stoffgemischen in die Säule, wobei das eluierte Sorptiv am Säulenablauf zyklisch und in konzentrierter Form auftritt und mittels dem Mehrwegeventil **6** in den Produktablauf **7** geleitet wird.

**Fig.2** gibt eine Ausführungsform wieder, bei dem im Temperierungsmittel eine zweite bevorzugt ringförmige Temperierungsvorrichtung **11** auf die ringförmige Temperierungsvorrichtung **9** aufgesetzt und im Betrieb vorgeschaltet ist. Ist die Temperierungsvorrichtung - wie bevorzugt - ein Kühlelement, ist die zweite Temperierungsvorrichtung ein Heizelement. Andrerseits ist die Temperierungsvorrichtung ein Heizelement, ist die zweite Temperierungsvorrichtung ein Kühlelement. Der Wirkbereich der (ersten) Temperierungsvorrichtung erstreckt sich wie im vorgenannten Ausführungsbeispiel auf die Fläche der Sorptionsoberfläche der Festbettsäule, bei der Desorption stattfindet. Der Wirkbereich wird in den genannten Beispielen von der Temperierungsvorrichtung erfasst und entspricht in erster Näherung dem von der (ersten) Temperierungsvorrichtung (nicht von der zweiten Temperierungsvorrichtung) überdeckten Flächenbereich auf der Festbettsäule. Zur Reduzierung von unerwünschter Wärmeübertragung von der Temperierungsvorrichtung zur zweiten Temperierungsvorrichtung ist eine zwischen diesen angeordnete Wärmeisolierung 12 vorgesehen. Die zweite Temperierungsvorrichtung dient der exakten Temperaturführung vor der Desorption und verhindert dabei insbesondere eine vorzeitige Desorption. Dadurch wird die Trennschärfe der Desorptionspeaks im Ablauf signifikant erhöht. Eine Abtrennung der Sorbtive in den Produktablauf **7** durch Umschaltung des Mehrwegeventil **6** kann wesentlich exakter erfolgen, was eine sortenreine Abtrennung signifikant verbessert.

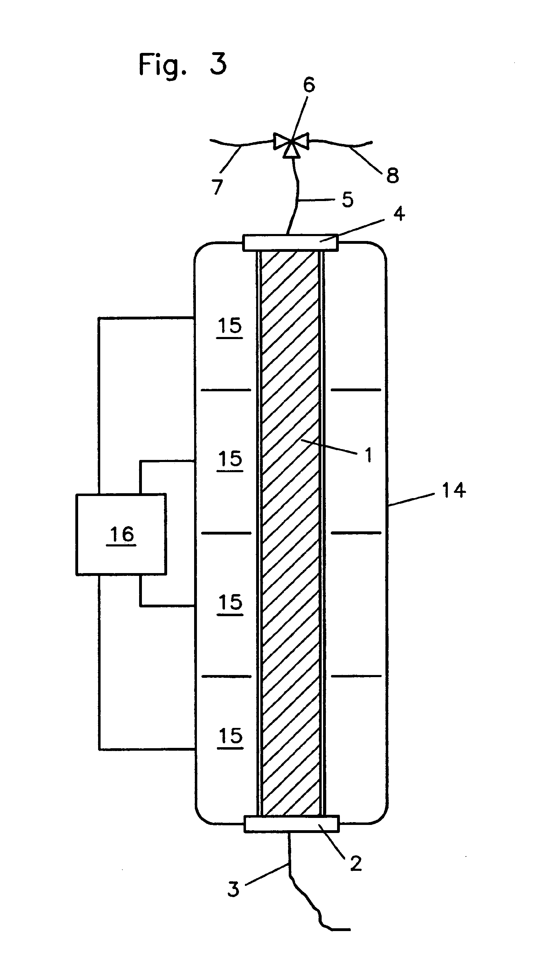

Die Festbettsäule sowie dessen Zu- und Ableitungen des in **Fig.3** dargestellten Ausführungsbeispieles entsprechen im Grundaufbau denen der vorgenannten Ausführungsformen. Anstelle einer auf der Festbettsäule relativ verfahrbaren Temperiervorrichtung weist dieses Ausführungsbeispiel eine auf der Festbettsäule fixierte und nicht bewegbare Temperierungsvorrichtung **14** mit mehreren, im Beispiel vier fix angeordneten und separat ansteuerbaren (aktivier- und dekativierbaren) Temperierungssegmenten **15** auf. Fest auf der Festbettsäule aufsitzende Temperierungssegmente zeichnen sich gegenüber den vorgenannten relativbeweglichen Temperierungsvorrichtung dadurch aus, dass die Wärmeübertragungsflächen zwischen Säule und Temperierelement nicht beweglich sind und damit ein Wärmeverlust durch verschiebare Teile oder eine Wärmeisolierung durch relativ schlecht wärmeleitende Gleitflächen nicht stattfindet und folglich eine bessere und damit schnellere Wärmeankopplung zwischen Temperierungsvorrichtung und Sorptionsflächen realisierbar ist.

Der Wirkbereich erstreckt sich in der letztgenannten Ausführungsform jeweils auf den Bereich der Sorptionsoberfläche unterhalb der aktiven Temperierungssegmente. Es ist vorgesehen, dass jeweils nur ein oder zwei Temperierungssegmente zugleich aktiv sind und die verbleibenden Temperierungssegmente nicht aktiv sind. Die Mittel für eine Verschiebung des Wirkbereichs über die gesamte Sorptionsoberfläche umfassen eine Ansteuerung **16** der Temperierungssegmente **15.** Durch ein segmentweises Durchschalten der Temperierungssegmente durch diese Mittel erfolgt eine Verschiebung des Wirkbereichs beginnend am Säulenanfang hin zum Säulenende.

Es liegt im Rahmen der Erfindung, die Temperierungsvorrichtung, insbesondere die zweiten Temperierungssegmente **15** (je nach Ausführung Kühl- oder Heizsegmente) nicht auf die Festbettsäule 1 aufzusetzen, sondern z.B. als elektrische Heizwendeln (als Heizsegmente) oder Kühlkanäle (als Kühlsegmente) im deren Innern zu integrieren, d.h. in der Schüttung des Sorbens einzubetten.

Ebenso liegt es im Rahmen der Erfindung, eine oder mehrere mit einem Temperierungsfluid durchströmbare Fluidleitungswendeln vom Säulenanfang zum Säulenende anzuordnen. Das segmentweise Verfahren des temperierten, d.h. gekühlten oder erhitzten Wirkbereichs erfolgt durch eine Durchströmung der Fluidströmungswendeln mit einer temperierten Fluidmenge, wobei die Durchströmungsgeschwindigkeit die Verfahrgeschwindigkeit vorgibt.

### Literatur

[1] US 4.378.439
[2] R.H.Wilhelm, A.W.Rice, A.R.Bendelius: Parametric Pumping: A Dynamic Principle for Separating Fluid Mixtures: I&EC Fundamental, Vol.5 (1966) pp.141-144

### Bezugszeichenliste

| | |
|---|---|
| 1 | Festbettsäule |
| 2 | Säulenanfang |
| 3 | Zulauf |
| 4 | Säulenende |
| 5 | Ablauf |
| 6 | Mehrwegeventil |
| 7 | Produktablauf |
| 8 | Reststoffablauf |
| 9 | Temperierungsvorrichtung |
| 10 | Verfahrvorrichtung |
| | |
| 11 | zweite Temperierungsvorrichtung |
| 12 | Wärmeisolierung |
| 13 | Vorschub |

## Patentansprüche

1. Vorrichtung zur sorptiven Trennung von flüssigen Stoffgemischen, umfassend
a) eine mit einem thermoresponsiven Sorbens mit einer Sorptionsoberfläche für Sorptive aus den Stoffgemischen gefüllten Festbettsäule **(1)** mit Zu- und Ablauf **(3, 5)** für die Stoffgemische sowie
b) einem Temperierungsmittel **(9, 11, 12)** zur Temperierung eines Wirkbereichs auf der Sorptionsoberfläche,
wobei
c) der Wirkbereich sich selektiv nur über einen Teil der Sorptionsoberfläche zugleich erstreckt sowie
d) Mittel für eine Verschiebung mit einer Vorschubgeschwindigkeit des Wirkbereichs über die gesamte Sorptionsoberfläche vorgesehen sind.

2. Vorrichtung nach Anspruch 1, **dadurch gekennzeichnet, dass** Mittel für eine Erfassung der Strömungsgeschwindigkeit des Stoffgemisches durch die Festbettsäule vorgesehen sind, wobei die Strömungsgeschwindigkeit größer oder gleich der Vorschubgeschwindigkeit und ein Eingangssignal der Mittel für eine Verschiebung ist.

3. Vorrichtung nach einem der vorgenannten Ansprüche, **dadurch gekennzeichnet, dass** das Temperierungsmittel eine Kühlvorrichtung **(9)** umfasst.

4. Vorrichtung nach einem der vorgenannten Ansprüche, **dadurch gekennzeichnet, dass** die Mittel mindestens eine Verfahrvorrichtung **(10)** für die Temperiervorrichtung und/oder die Festbettsäule umfassen.

5. Vorrichtung nach einem der vorgenannten Ansprüche, **dadurch gekennzeichnet, dass** die Temperierungsmittel (10) ein um die Festbettsäule angeordnetes und axial relativ zu dieser verschiebbares ringförmiges Element umfasst.

6. Vorrichtung nach Anspruch 5, **dadurch gekennzeichnet, dass** das Element ein ringförmiges zweites Temperierungsmittel **(11)** mit einer Isolierschicht **(12)** als Teil des Temperierungsmittel umfasst.

7. Vorrichtung nach einem der vorgenannten Ansprüche, **dadurch gekennzeichnet, dass** die Mittel **(10)** einen Linearantrieb mit einer axial zur Säule orientierten Vorschubrichtung aufweist.

8. Vorrichtung nach einem der vorgenannten Ansprüche, **dadurch gekennzeichnet, dass** das thermoresponsive Sorbens als Partikelschüttung, stabilisierte Wirbelschicht oder offenporiger Monolith ausgeführt ist.

9. Vorrichtung nach einem der vorgenannten Ansprüche, **dadurch gekennzeichnet, dass** eine Ventilschaltung **(6)** für eine Umleitung von desorbierten Substanzen in einen Produktablauf **(7)** am Ablauf vorgesehen ist.

10. Vorrichtung nach einem der vorgenannten Ansprüche umfassend eine Klimakammer für die Festbettsäule und die Temperierungsmittel.

11. Verfahren zur sorptiven Trennung von flüssigen Stoffgemischen, umfassend die folgenden Verfahrensschritte:
a) Durchleitung der Stoffgemische über den Zu- zum Ablauf **(3, 5)** zu einer mit einem thermoresponsivem Sorbens mit einer Sorptionsoberfläche für Sorptive aus den Stoffgemischen gefüllten Festbettsäule **(1)** für die Stoffgemische, wobei sich in dieser eine Strömungsgeschwindigkeit ausbildet und wodurch es zu einer Sorption von Sorptiven aus den Stoffgemischen an der Sorptionsoberfläche kommt,
b) Einschalten eines Temperierungsmittel **(9, 11, 12)** in Ausgangsposition am Zulauf, wobei ein Wirkbereich auf der Sorptionsoberfläche im Bereich des Zulaufs temperiert wird und die Sorptive im Wirkbereich dadurch desorbieren,
c) Verfahren des Wirkbereichs mit einer Vorschubgeschwindigkeit in Richtung des Ablaufs, wobei die gesamte Sorptionsoberfläche seriell temperiert und die Sorptive dort desorbiert werden, wobei die Sorptive in Richtung des Ablaufs **(5)** transportiert und über einen Produktablauf **(7)** ausgeschleust werden.

12. Verfahren nach Anspruch 11, **dadurch gekennzeichnet, dass** das Verfahren des Wirkbereichs durch mechanisches Verfahren der Temperiermittel und/oder der Festbettsäule erfolgt.

13. Verfahren nach Anspruch 11 oder 12, **dadurch gekennzeichnet, dass** die Vorschubgeschwindigkeit zwischen 10 und 110% der Strömungsgeschwindigkeit liegt.

14. Verfahren nach einem der Ansprüche 11 bis 13, **dadurch gekennzeichnet, dass** das Temperierungsmittel **(9, 11, 12)** nach Erreichen des Ablaufs **(5)** ohne Unterbrechung der Durchleitung deaktiviert sowie in Ausgangsposition zurückgefahren wird.

15. Verfahren nach Anspruch 14, **dadurch gekennzeichnet, dass** das Temperierungsmittel in Ausgangsposition bis zu einem erneuten Beginn des Verfahrens solange verharrt, bis durch die im Zulauf vorhandenen Stoffe sich eine erneute Beladung des Sorbens durch das Stoffgemisch ergibt.

## Claims

1. Device for the sorptive separation of liquid substance mixtures, comprising
a) a fixed bed column **(1)** which is filled with a thermoresponsive sorbent having a sorption surface for sorptives from the substance mixtures and which has an inlet and an outlet **(3, 5)** for the substance mixtures, and
b) a temperature control means **(9, 11, 12)** for controlling the temperature of an effective area on the sorption surface,
wherein
c) the effective area selectively extends only over a part of the sorption surface at the same time, and
d) means are provided for moving at an advancement speed of the effective area over the entire sorption surface.

2. Device according to claim 1, **characterised in that** means are proved for capturing the flow speed of the substance mixture through the fixed bed column, wherein the flow speed is greater than or equal to the advancement speed and an input signal of the means for a movement.

3. Device according to any one of the preceding claims, **characterised in that** the temperature control means comprises a cooling device **(9).**

4. Device according to any one of the preceding claims, **characterised in that** the means comprise at least one displacement device **(10)** for the temperature control device and/or the fixed bed column.

5. Device according to any one of the preceding claims, **characterised in that** the temperature control means **(10)** comprises a ring-shaped element arranged about the fixed bed column and axially movable relative thereto.

6. Device according to claim 5, **characterised in that** the element comprises a ring-shaped second temperature control means **(11)** with an insulating layer **(12)** as part of the temperature control means.

7. Device according to any one of the preceding claims, **characterised in that** the means (10) has a linear drive with an advancement direction oriented axially to the column.

8. Device according to any one of the preceding claims, **characterised in that** the thermoresponsive sorbent is designed as a particle bed, stabilised fluidised bed or open-pored monolith.

9. Device according to any one of the preceding claims, **characterised in that** a valve-switching facility **(6)** is provided for diverting desorbed substances into a product outlet **(7)** at the outlet.

10. Device according to any one of the preceding claims, comprising a climate chamber for the fixed bed column and the temperature control means.

11. Method for the sorptive separation of liquid substance mixtures, comprising the following steps:
a) Transit of the substance mixtures via the inlet to the outlet **(3, 5)** to a fixed bed column **(1)** for the substance mixtures, which is filled with a thermoresponsive sorbent having a sorption surface for sorptives from the substance mixtures, with a flow speed forming therein, leading to a sorption of sorptives from the substance mixtures on the sorption surface,
b) Switching on a temperature control means **(9, 11, 12)** in the home position at the inlet, wherein an effective area on the sorption surface is temperature-controlled in the area of the inlet and the sorptives in the effective area are thereby desorbed.
c) Displacement of the effective area at an advancement speed in the direction of the outlet, wherein the entire sorption surface is serially temperature-controlled and the sorptives are desorbed there, wherein the sorptives are transported in the direction of the outlet **(5)** and transferred outward via a product outlet **(7).**

12. Method according to claim 11, **characterised in that** the displacement of the effective area is effected by mechanically displacing the temperature control means and/or the fixed bed column.

13. Method according to claim 11 or 12, **characterised in that** the advancement speed is between 10 and 110% of the flow speed.

14. Method according to any one of claims 11 to 13, **characterised in that** the temperature control means **(9, 11, 12)** is deactivated after reaching the outlet **(5)** without interrupting the transit and retracted to the home position.

15. Method according to claim 14, **characterised in that** the temperature control means remains in the home position until a restart of the displacement, until the sorbent is recharged by the substance mixture due to the substances present in the inlet.

## Revendications

1. Dispositif pour la séparation par sorption de mélanges de matières liquides comportant :
a) une colonne à lit fixe (1) remplie d'un agent de sorption sensible à la température ayant une surface de sorption permettant la séparation par sorption à partir du mélange de matières, équipée d'une entrée et d'une sortie (3, 5) du mélange de matières, et
b) un agent d'équilibrage de température (9, 11, 12) pour équilibrer la température d'une zone active sur la surface de sorption,
dans lequel
c) la zone active ne s'étend sélectivement simultanément que sur une partie de la surface de sorption, et
d) il est prévu des moyens permettant de déplacer de la zone active avec une vitesse d'avancement sur la totalité de la surface de sorption.

2. Dispositif conforme à la revendication 1,
**caractérisé en ce qu'**
il est prévu des moyens permettant de détecter la vitesse d'écoulement du mélange de matières au travers de la colonne à lit fixe, cette vitesse d'écoulement étant supérieure ou égale à la vitesse d'avancement et un signal d'entrée constituant les moyens permettant le déplacement.

3. Dispositif conforme à l'une des revendications précédentes,
**caractérisé en ce que**
les moyens d'équilibrage de la température renferment un dispositif de refroidissement (9).

4. Dispositif conforme à l'une des revendications précédentes,
**caractérisé en ce que**
les moyens renferment au moins un dispositif de déplacement (10) pour le dispositif d'équilibrage de la température et/ou la colonne à lit fixe.

5. Dispositif conforme à l'une des revendications précédentes,
**caractérisé en ce que**
les moyens d'équilibrage de la température (10) renferment un élément annulaire disposé autour de la colonne à lit fixe et déplaçable axialement relativement à celle-ci.

6. Dispositif conforme à la revendication 5,
**caractérisé en ce que**
l'élément renferme des seconds moyens d'équilibrage de la température (11) annulaires comportant une couche d'isolation (12) faisant partie des moyens d'équilibrage de la température.

7. Dispositif conforme à l'une des revendications précédentes,
**caractérisé en ce que**
les moyens (10) comportent un entrainement linéaire ayant une direction d'avancement orientée axialement par rapport à la colonne.

8. Dispositif conforme à l'une des revendications précédentes,
**caractérisé en ce que**
l'agent de sorption sensible à la température est réalisé sous la forme d'une masse de particules en vrac, d'une couche fluidisée stabilisée ou d'un élément monolithique à pores ouverts.

9. Dispositif conforme à l'une des revendications précédentes,
**caractérisé en ce qu'**
il est prévu au niveau de la sortie un montage de soupape (6) permettant de transférer des substances désorbées dans un circuit d'évacuation de produits (7).

10. Dispositif conforme à l'une des revendications précédentes, comprenant une chambre de climatisation pour la colonne à lit fixe et les moyens d'équilibrage de la température.

11. Procédé permettant la séparation par sorption de mélanges de matières liquides comprenant les étapes suivantes :
a) transfert du mélange de matières par l'entrée vers la sortie (3, 5) dans une colonne à lit fixe (1) pour le mélange de matières remplie d'un agent de sorption sensible à la température ayant une surface de sorption permettant la séparation par sorption à partir du mélange de matières, une vitesse d'écoulement s'établissant dans cette colonne, de façon à obtenir une séparation par sorption d'agents de sorption du mélange de matières sur la surface de sorption,
b) connection de moyens d'équilibrage de la température (9, 11, 12) dans une position de départ au niveau de l'entrée, une zone active sur la surface de sorption étant ainsi équilibrée en température dans la zone de l'entrée et les agents de sorption se désorbant ainsi dans cette zone active,
c) déplacement de la zone active avec une vitesse d'avancement en direction de la zone de sortie, la totalité de la surface de sorption étant ainsi équilibrée en température en série, et les agents de sorption y étant désorbés, les agents de sorption étant transportés en direction de la sortie (5) et étant évacués par une sortie de produits (7).

12. Procédé conforme à la revendication 11,
**caractérisé en ce que**
le déplacement de la zone active s'effectue par déplacement mécanique des moyens d'équilibrage de la température et/ou de la colonne à lit fixe.

13. Procédé conforme à la revendication 11 ou 12,
**caractérisé en ce que**
la vitesse d'avancement est située entre 10 et 110 % de la vitesse d'écoulement.

14. Procédé conforme à l'une des revendications 11 à 13,
**caractérisé en ce que**
les moyens d'équilibrage de la température (9, 11, 12) sont désactivés et sont ramenés dans la position de départ après avoir atteint la sortie (5) sans interruption de l'écoulement.

15. Procédé conforme à la revendication 14,
**caractérisé en ce que**
les moyens d'équilibrage de la température s'arrêtent dans la position de départ jusqu'à un nouveau démarrage du procédé jusqu'à ce qu'il y ait, par les matières présentes au niveau de l'entrée une nouvelle charge d'agents de sorption par le mélange de matières.
